# EUROPÄISCHE PATENTSCHRIFT

(11) **EP 3 542 086 B1**
(45) Veröffentlichungstag und Bekanntmachung des Hinweises auf die Patenterteilung: **26.08.2020**
(21) Anmeldenummer: 17800729.0
(22) Anmeldetag: 31.10.2017
(51) Int. Cl.: F16H 57/04, F01M 11/00, B01D 29/00, B01D 35/027, F16N 39/00, F16N 39/06

(54) **SAUGÖLFILTER FÜR EIN GETRIEBE ODER VERBRENNUNGSMOTOR**
SUCTION OIL FILTER FOR A TRANSMISSION OR COMBUSTION ENGINE
FILTRE D'ASPIRATION D'HUILE POUR TRANSMISSION OU MOTEUR À COMBUSTION INTERNE

(30) Priorität: 15.11.2016 DE 102016121863
(43) Veröffentlichungstag der Anmeldung: 25.09.2019
(73) Patentinhaber: BOGE Elastmetall GmbH, 49401 Damme (DE); ZF Friedrichshafen AG, 88046 Friedrichshafen (DE)
(72) Erfinder: ROSENDAHL, Marco, 49597 Rieste (DE); WEHMING, Andreas, 49401 Damme (DE); KÜMPER, Dominik, 49401 Damme (DE); BRUSSA, Stephan, 88085 Langenargen (DE)
(74) Vertreter: Bossmeyer, Jörg Peter
(86) Internationale Anmeldenummer: PCT/EP2017/077930
(87) Internationale Veröffentlichungsnummer: WO 2018/091267

(56) Entgegenhaltungen:
- EP-A1- 2 324 900
- DE-A1-102012 010 939
- DE-A1-102012 221 554
- FR-A1- 2 977 805

## Beschreibung

Saugölfilter für ein Getriebe oder Verbrennungsmotor Die Erfindung betrifft einen Saugölfilter für ein Getriebe oder Verbrennungsmotor, mit einem Ölfiltergehäuse aus Kunststoff, das wenigstens einen mit einer Saugseite einer Saugpumpe verbindbaren Saugkanal und wenigstens einen in den Saugkanal einmündenden Rückführungskanal für einen von der Saugpumpe zurückgeführten Druckölstrom aufweist, wobei der Rückführungskanal im Bereich seiner Mündung in den Saugkanal mit wenigstens einer Düse versehen ist, und wenigstens einem an den Rückführungskanal angeschlossenen und mit einer Druckseite der Saugpumpe verbindbaren Druckölzuführrohr.

Die DE10 2012 221 554 A1 und die DE 10 2012 010 939 A1 offenbaren eine Saugölfiltereinheit für Getriebe oder Verbrennungsmotoren mit einem Ölfiltergehäuse aus Kunststoff, das wenigstens einen mit einer Saugpumpe verbindbaren Saugkanal und wenigstens einen Rückführungskanal für einen von der Saugpumpe zurückgeführten Druckölvolumenstrom zwecks Ansaugaufladung des Pumpensaugölstroms aufweist, wobei der Rückführungskanal im Bereich seiner Mündung in den Saugkanal mit wenigstens einer Düseneinrichtung versehen ist, die wenigstens einen in den Rückführungskanal eingesetzten, nicht einstückig mit dem Rückführungskanal ausgebildeten Düsenkörper aufweist. Der Düsenkörper wird in der Einbaulage zwischen einem umlaufenden Absatz der Mündung des Rückführungskanals und einem Druckölzuführrohr gehalten, das in einen muffenartig aufgeweiteten Abschnitt des Rückführungskanals eingesetzt ist.

Bei bekannten Saugölfiltern mit integrierter Saugaufladung wird das Druckölzuführrohr zur Rückführung des Ölstroms mit dem Oberteil des Ölfiltergehäuses an mehreren Stellen mit Schrauben und Messinghülsen verschraubt, was mit relativ hohen Fertigungskosten verbunden ist.

Ausgehend hiervon liegt der Erfindung die Aufgabe zugrunde, die Fertigungskosten für einen Saugölfilter der eingangs genannten Art reduzieren zu können.

Diese Aufgabe wird erfindungsgemäß durch einen Saugölfilter nach Anspruch 1 gelöst. Bevorzugte Weiterbildungen der Erfindung sind in den Unteransprüchen und in der nachfolgenden Beschreibung gegeben.

Der erfindungsgemäße Saugölfilter für ein Getriebe oder Verbrennungsmotor, weist ein Ölfiltergehäuse aus Kunststoff, das einen oder wenigstens einen mit einer Saugseite einer Saugpumpe verbindbaren Saugkanal und einen oder wenigstens einen in den Saugkanal einmündenden Rückführungskanal für einen von der Saugpumpe zurückgeführten Druckölstrom, insbesondere zwecks Aufladung eines von der Saugpumpe angesaugten Saugölstroms, umfasst, wobei der Rückführungskanal im Bereich seiner Mündung in den Saugkanal mit wenigstens einer Düse versehen ist, und ein oder wenigstens ein an den Rückführungskanal angeschlossenes und mit einer Druckseite der Saugpumpe verbindbares Druckölzuführrohr auf, welches über eine oder wenigstens eine Konturenverbindung formschlüssig mit dem Ölfiltergehäuse verbunden ist.

Durch die oder die wenigstens eine Konturenverbindung können die im Stand der Technik bekannten Schraubverbindungen mit Schrauben und Messinghülsen zumindest teilweise oder sogar ganz entfallen, sodass Material und Montageaufwand reduzierbar sind. Somit können die Fertigungskosten deutlich reduziert werden.

In das Ölfiltergehäuse ist insbesondere ein Öl eingebracht. Bevorzugt umfasst das Ölfiltergehäuse einen Gehäuseinnenraum, in den vorzugsweise das Öl eingebracht ist. Vorteilhaft ist das oder ein Teil des oder zumindest ein Teil des in das Ölfiltergehäuse eingebrachten Öls mittels der Saugpumpe durch den Saugkanal hindurch ansaugbar. Das mittels der Ansaugpumpe angesaugte Öl bildet insbesondere den oder einen Saugölstrom. Bevorzugt wird von der Saugpumpe ein Rückführölstrom zu dem Ölfiltergehäuse und/oder zu dem Gehäuseinnenraum zurückgeführt. Somit ergibt sich insbesondere ein Ölkreislauf. Bevorzugt bildet der Druckölstrom einen Teil des Rückführölstroms. Vorzugsweise wird der Druckölstrom von dem Rückführölstrom abgezweigt. Der um den Druckölstrom verringerte Rückführölstrom wird insbesondere als Rückführölhauptstrom bezeichnet. Bevorzugt wird der Rückführölhauptstrom zu dem Ölfiltergehäuse und/oder zu dem Gehäuseinnenraum zurückgeführt.

In dem oder einem von der Saugpumpe angesaugten Saugölstrom kann Kavitation auftreten, was zu einer Beschädigung der Saugpumpe führen kann. Um das Auftreten von Kavitation vermeiden oder reduzieren zu können, wird der von der Saugpumpe zurückgeführte Druckölstrom mittels der Düse, insbesondere innerhalb des Saugkanals, in den Saugölstrom eingespritzt, was auch als Aufladung des Saugölstroms bezeichnet wird. Anstelle des Ausdrucks Aufladung können auch die Ausdrücke Saugaufladung oder Ansaugaufladung verwendet werden. Die Saugpumpe ist bevorzugt eine Kreiselpumpe oder Flügelzellenpumpe.

Die oder die wenigstens eine Konturenverbindung umfasst bevorzugt einen oder wenigstens einen ölfiltergehäuseseitigen Verbindungsteil und einen oder wenigstens einen druckölzuführrohrseitigen Verbindungsteil. Bevorzugt greifen der oder der wenigstens eine ölfiltergehäuseseitige Verbindungsteil und der oder der wenigstens eine druckölzuführrohrseitige Verbindungsteil formschlüssig ineinander.

Der oder der wenigstens eine ölfiltergehäuseseitige Verbindungsteil wird bevorzugt bei der Herstellung des Ölfiltergehäuses mit ausgebildet, beispielsweise in einem Spritzgusswerkzeug. Somit ist der oder der wenigstens eine ölfiltergehäuseseitige Verbindungsteil kostengünstig ausbildbar. Bevorzugt ist das Ölfiltergehäuse ein Spritzgussteil und/oder das Ölfiltergehäuse ist aus Spritzgussteilen zusammengesetzt. Vorteilhaft bildet das Ölfiltergehäuse zusammen mit dem oder dem wenigstens einen ölfiltergehäuseseitigen Verbindungsteil ein monolithisches Bauteil.

Gemäß einer Weiterbildung umfasst das Ölfiltergehäuse zwei Halbschalen. Insbesondere ist das Ölfiltergehäuse aus zwei oder den Halbschalen zusammengesetzt. Bevorzugt sind die Halbschalen, insbesondere randseitig, vorzugsweise fest und/oder starr und/oder stoffschlüssig und/oder flüssigkeitsdicht, miteinander verbunden. Vorteilhaft begrenzen die Halbschalen den oder einen Gehäuseinnenraum des Ölfiltergehäuses. Vorzugsweise bestehen die Halbschalen jeweils aus Kunststoff. Insbesondere ist jede der Halbschalen ein Spritzgussteil.

Bevorzugt ist das Druckölzuführrohr über die oder die wenigstens eine Konturenverbindung formschlüssig mit einer ersten der Halbschalen verbunden. Vorteilhaft wird der oder der wenigstens eine ölfiltergehäuseseitige Verbindungsteil bei der Herstellung der ersten Halbschale mit ausgebildet, beispielsweise in einem Spritzgusswerkzeug. Vorteilhaft bildet die erste Halbschale zusammen mit dem oder dem wenigstens einen ölfiltergehäuseseitigen Verbindungsteil ein monolithisches Bauteil.

Bevorzugt besteht das Druckölzuführrohr aus Kunststoff. Insbesondere ist das Druckölzuführrohr ein Spritzgussteil. Vorteilhaft wird der oder der wenigstens eine druckölzuführrohrseitige Verbindungsteil bei der Herstellung des Druckölzuführrohrs mit ausgebildet, beispielsweise in einem Spritzgusswerkzeug. Vorteilhaft bildet das Druckölzuführrohr zusammen mit dem oder dem wenigstens einen druckölzuführrohrseitigen Verbindungsteil ein monolithisches Bauteil.

Gemäß einer Weiterbildung umfasst die oder die wenigstens eine Konturenverbindung eine oder mehrere Gleitführungen. Vorteilhaft umfasst oder umfassen die oder die wenigstens eine Konturenverbindung und/oder die eine oder die mehreren Gleitführungen eine oder mehrere Schwalbenschwanzverbindungen und/oder eine oder mehrere Schwalbenschwanzführungen und/oder eine oder mehrere Schienenführungen. Vorteilhaft ist die eine oder jede der Gleitführungen als Schwalbenschwanzverbindung oder Schwalbenschwanzführung oder als Schienenführung ausgebildet. Somit ist es möglich, das Druckölzuführrohr und das Ölfiltergehäuse durch Zusammenschieben miteinander zu verbinden. Insbesondere ist oder wird das Druckölzuführrohr auf das Ölfiltergehäuse aufgeschoben.

Gemäß einer Ausgestaltung erstreckt sich der Rückführungskanal in einer Rückführungskanalrichtung. Bevorzugt ist der Innenquerschnitt des Rückführungskanals entlang der Rückführungskanalrichtung konstant.

Vorzugsweise ist der Rückführungskanal bezüglich einer, insbesondere in Rückführungskanalrichtung verlaufenden, Rückführungskanalachse rotationssymmetrisch oder im Wesentlichen rotationssymmetrisch ausgebildet. Beispielsweise ist der Rückführungskanal, vorzugsweise insgesamt, zylindrisch ausgebildet. Der Rückführungskanal weist bevorzugt einen strömungs- und druckoptimierten Querschnitt oder Innenquerschnitt auf. Vorzugsweise weist der Rückführungskanal einen kreisförmigen oder einen ovalen Querschnitt oder Innenquerschnitt auf.

Gemäß einer Weiterbildung erstreckt sich die eine oder jede der Gleitführungen und/oder Schwalbenschwanzverbindungen und/oder Schwalbenschwanzführungen und/oder Schienenführungen in oder näherungsweise in Rückführungskanalrichtung. Somit ist es auf einfache Weise möglich, das Druckölzuführrohr bei der Montage an den Rückführungskanal anzuschließen.

Bevorzugt weist die oder die wenigstens eine Konturenverbindung und/oder die oder jede der Gleitführungen ein oder wenigstens ein Eingriffselement und ein oder wenigstens ein Gegeneingriffselement auf, welches insbesondere formschlüssig mit dem oder dem jeweiligen Gegeneingriffselement ineinander greift. Das oder die Eingriffselemente sind bevorzugt an dem Druckölzuführrohr vorgesehen. Bevorzugt bildet oder umfasst der oder der wenigstens eine druckölzuführrohrseitige Verbindungsteil das oder jedes der Eingriffselemente.

Das oder die Gegeneingriffselemente sind bevorzugt an dem Ölfiltergehäuse und/oder an der ersten Halbschale vorgesehen. Bevorzugt bildet oder umfasst der oder der wenigstens eine ölfiltergehäuseseitige Verbindungsteil das oder jedes der Gegeneingriffselemente. Das oder jedes der Eingriffselemente ist z.B. als Gleitelement oder als Nut ausgebildet. Ferner ist das oder jedes der Gegeneingriffselemente z.B. als Nut oder als Gleitelement ausgebildet. Vorzugsweise greift das oder jedes der Gleitelemente in die oder eine der Nuten, insbesondere formschlüssig, ein. Die Nut oder die Nuten erstrecken sich insbesondere in oder näherungsweise in Rückführungskanalrichtung.

Bevorzugt ist das Druckölzuführrohr zusätzlich durch eine oder wenigstens eine Verschnappung oder Schnappverbindung mit dem Ölfiltergehäuse und/oder dem Rückführungskanal verbunden. Somit kann eine Bewegung des Druckölzuführrohrs relativ zu dem Ölfiltergehäuse, beispielsweise in Richtung der Gleitführungen, verhindert werden. Die Verschnappung oder Schnappverbindung ist vorzugsweise eine Kunststoff-Schnappverbindung.

Gemäß einer Ausgestaltung ist das Druckölzuführrohr zusätzlich durch eine oder wenigstens eine, insbesondere selbstfurchende, Schraubverbindung mit dem Ölfiltergehäuse und/oder dem Rückführungskanal verbunden. Hierdurch kann das Druckölzuführrohr zusätzlich an dem Ölfiltergehäuse gesichert werden. Sofern eine selbstfurchende Schraubverbindung eingesetzt wird, kann insbesondere auf eine Hülse, wie z.B. eine Messinghülse, verzichtet werden.

Gemäß einer Weiterbildung ist das Druckölzuführrohr, insbesondere zusammen mit der Düse, in den Rückführungskanal eingesteckt. Der in den Rückführungskanal eingesteckte Bereich oder Endbereich des Druckölzuführrohrs ist an seinem Außenumfang insbesondere mittels einer Dichtung gegenüber dem Innenumfang des Rückführungskanals abgedichtet. Bevorzugt ist die Düse zwischen der Mündung des Rückführungskanals in den Saugkanal und dem Druckölzuführrohr angeordnet. Vorteilhaft ist die Düse zwischen einem, insbesondere umlaufenden, Absatz der Mündung des Rückführungskanals und dem Druckölzuführrohr angeordnet.

Die Düse umfasst insbesondere einen Düsenkörper, durch welchen sich eine Düsenausnehmung hindurch erstreckt. Bevorzugt verjüngt sich die Düsenausnehmung von ihrem druckölzuführrohrseitigen Ende bis zu ihrem mündungsseitigen Ende. Die Düse und/oder der Düsenkörper ist an ihrem und/oder seinem Außenumfang insbesondere mittels einer Dichtung gegenüber dem Innenumfang des Rückführungskanals abgedichtet. Die Düse und/oder der Düsenkörper besteht vorzugsweise aus Kunststoff. Insbesondere ist die Düse ein Spritzgussteil.

Gemäß einer Ausgestaltung ist die Düse, insbesondere fest und/oder starr, mit dem Druckölzuführrohr verbunden. Vorteilhaft ist die Düse lösbar mit dem Druckölzuführrohr verbunden. Bevorzugt ist die Düse mit dem Druckölzuführrohr, insbesondere mittels einer Verriegelungskontur, verrastet oder formschlüssig verrastet. Beispielsweise ist die Düse in einen an einem dem Rückführungskanal zugewandten stirnseitigen Ende des Druckölzuführrohrs vorgesehenen Verriegelungsbereich eingeschoben und/oder eingesetzt und/oder an oder in diesem verrastet. Somit kann ein gerichteter Einbau der Düse in den Rückführungskanal sichergestellt werden.

Bevorzugt bildet der Rohrinnenraum des Druckölzuführrohrs einen Fließkanal. Insbesondere ist durch den Fließkanal hindurch der von der Saugpumpe zurückgeführte Druckölstrom der Düse und/oder dem Rückführungskanal zuführbar. Bevorzugt ist der Übergang zwischen dem Druckölzuführrohr und der Düse derart gestaltet, dass der Fließkanal kontinuierlich in die Düsenausnehmung übergeht. Vorzugsweise weist der Rohrinnenraum des Druckölzuführrohrs und/oder der Fließkanal in oder zumindest in seinem der Düse zugewandten Endbereich einen ovalen Querschnitt auf. Somit ist insbesondere ein kontinuierlicher Übergang des Fließkanals in die Düsenausnehmung bei gleichzeitig großer Querschnittsfläche des Fließkanals realisierbar. Ferner ist somit insbesondere eine hohe Festigkeit des Druckölzuführrohrs in seinem der Düse zugewandten Endbereich erzielbar. Anstelle eines ovalen Querschnitts ist auch ein anderer Querschnitt möglich, der in zwei senkrecht zueinander verlaufenden Richtungen insbesondere unterschiedliche Abmessungen und/oder Längen aufweist.

Bevorzugt umfasst das Druckölzuführrohr einen gekrümmten Abschnitt, der insbesondere durch den oder einen der Düse zugewandten Endbereich des Druckölzuführrohrs gebildet ist. Vorzugsweise ist das Druckölzuführrohr somit in seinem der Düse zugewandten Endbereich gekrümmt ausgebildet. Vorteilhaft weist das Druckölzuführrohr einen sich an den gekrümmten Abschnitt anschließenden geraden Abschnitt auf. Bevorzugt weist der Rohrinnenraum des Druckölzuführrohrs und/oder der Fließkanal in dem geraden Abschnitt einen sich entlang der Längserstreckung des geraden Abschnitts ändernden Querschnitt auf, der sich insbesondere von einem ovalen Querschnitt zu einem kreisrunden Querschnitt ändert.

Gemäß einer Ausgestaltung erstreckt sich der Saugkanal in einer Saugkanalrichtung. Bevorzugt ist der Innenquerschnitt des Saugkanals entlang der Saugkanalrichtung konstant. Vorzugsweise ist der Saugkanal bezüglich einer, insbesondere in Saugkanalrichtung verlaufenden, Saugkanalachse rotationssymmetrisch oder im Wesentlichen rotationssymmetrisch ausgebildet. Beispielsweise ist der Saugkanal, vorzugsweise insgesamt, zylindrisch ausgebildet.

Bevorzugt erstreckt sich das Druckölzuführrohr an seinem dem Rückführungskanal abgewandten Ende in oder näherungsweise in Saugkanalrichtung. Vorzugsweise erstreckt sich der gerade Abschnitt des Druckölzuführrohrs in oder näherungsweise in Saugkanalrichtung. Somit ist es möglich, den Saugkanal und das Druckölzuführrohr von derselben Seite her mit der Saugpumpe zu verbinden.

Gemäß einer Weiterbildung weist das Druckölzuführrohr eine Magnetaufnahme auf, mittels welcher ein oder wenigstens ein Magnet gehalten ist oder wird oder haltbar ist. Der oder der wenigstens eine Magnet dient insbesondere dazu, in dem Öl vorhandene magnetische oder magnetisierbare Partikel festzuhalten. Solche Partikel entstehen z.B. durch Abrieb in dem Getriebe oder Verbrennungsmotor. Der oder der wenigstens eine Magnet kann ein Elektromagnet sein. Bevorzugt ist der oder der wenigstens eine Magnet aber ein Permanentmagnet. Somit ist keine elektrische Stromversorgung für den oder den wenigstens einen Magneten erforderlich. Ferner ist die Wirkung eines Permanentmagneten unabhängig von einem etwaigen Stromausfall. Die Magnetaufnahme besteht insbesondere aus Kunststoff. Vorteilhaft bildet das Druckölzuführrohr zusammen mit der Magnetaufnahme und/oder mit dem oder dem wenigstens einen druckölzuführrohrseitigen Verbindungteil ein monolithisches Bauteil. Die Verschnappung oder Schnappverbindung ist z.B. zwischen der Magnetaufnahme und dem Ölfiltergehäuse oder dem Druckölzuführrohr vorgesehen. Beispielsweise wird über den oder den wenigstens einen Magneten und/oder die Magnetaufnahme zusätzlich das Druckölzuführrohr über die oder eine Schnappverbindung, vorzugsweise mit dem Ölfiltergehäuse und/oder dem Rückführungskanal, gegen Lösen verriegelt. Diese Schnappverbindung ist insbesondere eine Kunststoff-Schnappverbindung.

Gemäß einer Ausgestaltung ist in dem Ölfiltergehäuse und/oder in dem Gehäuseinnenraum ein oder wenigstens ein Filtermedium vorgesehen. Insbesondere ist mittels des oder des wenigstens einen Filtermediums das in das Ölfiltergehäuse und/oder in den Gehäuseinnenraum eingebrachte Öl filterbar. Bevorzugt ist das Filtermedium zwischen dem Saugölstrom und dem Rückführölhauptstrom vorgesehen. Vorteilhaft ist das oder das wenigstens eine Filtermedium, insbesondere randseitig, zwischen den Halbschalen festgelegt. Das oder das wenigstens eine Filtermedium ist oder umfasst bevorzugt ein oder wenigsten ein Filtervlies.

Gemäß einer Weiterbildung weist das Ölfiltergehäuse eine mit der Druckseite der Saugpumpe verbindbare und/oder an die Druckseite der Pumpe anschließbare Ölrückführöffnung auf, die insbesondere der Rückführung des oder eines Teils oder zumindest eines Teils des von der Saugpumpe angesaugten Öls dient. Bevorzugt wird durch die Ölrückführöffnung der Rückführölstrom und/oder Rückführölhauptstrom dem Ölfiltergehäuse und/oder dem Gehäuseinnenraum zugeführt. Vorteilhaft sind die Ölrückführöffnung und der Saugkanal auf unterschiedlichen Seiten des oder des wenigstens einen Filtermediums vorgesehen. Die Ölrückführöffnung kann in der ersten Halbschale vorgesehen sein. Bevorzugt ist die Ölrückführöffnung aber in der oder einer zweiten der Halbschalen vorgesehen.

Die Erfindung wird nachfolgend anhand einer bevorzugten Ausführungsform unter Bezugnahme auf die Zeichnung beschrieben, In der Zeichnung zeigen:
Fig. 1 eine perspektivische Ansicht eines Saugölfilters gemäß einer Ausführungsform,
Fig. 2 eine andere perspektivische Ansicht des Saugölfilters,
Fig. 3 eine perspektivische Explosivdarstellung des Saugölfilters,
Fig. 4 eine perspektivische Ansicht eines Druckölzuführrohrs des Saugölfilters mit angeschlossener Düse,
Fig. 5 eine Schnittansicht des Druckölzuführrohrs und der Düse entlang einer aus Fig. 4 ersichtlichen Schnittlinie A-A,
Fig. 6 eine perspektivische Ansicht eines Saugölfiltergehäuses des Saugölfilters und des Druckölzuführrohrs vor seiner Montage an dem Saugölfiltergehäuse und
Fig. 7 eine perspektivische Ansicht des Saugölfiltergehäuses und des Druckölzuführrohrs im teilmontierten Zustand sowie von zwei Schrauben.

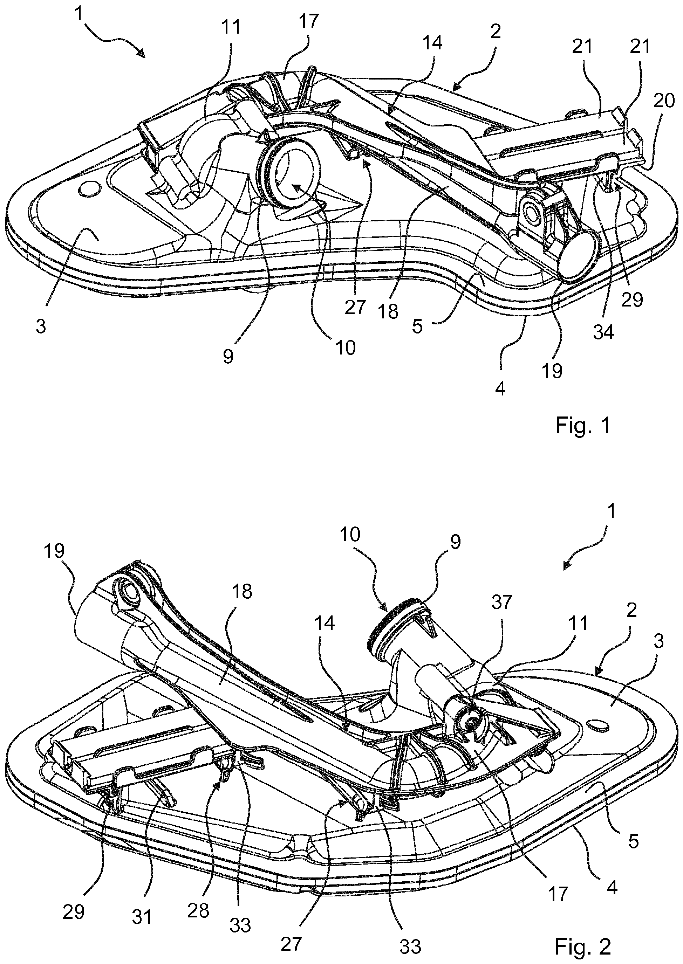

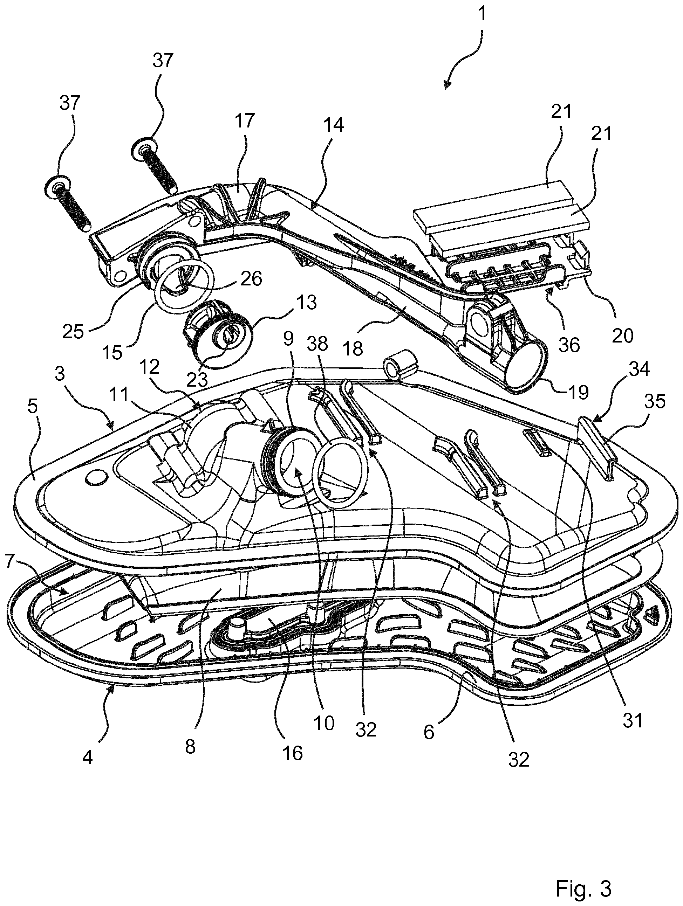

Aus den Fig. 1 bis 3 sind unterschiedliche Ansichten eines Saugölfilters 1 gemäß einer Ausführungsform ersichtlich, der ein Ölfiltergehäuse 2 aufweist, welches aus zwei Kunststoffhalbschalen 3 und 4 zusammengesetzt ist, die entlang ihrer Ränder 5 und 6 umlaufend miteinander verschweißt sind. Die Kunststoffhalbschalen 3 und 4 begrenzen einen Gehäuseinnenraum 7 des Ölfiltergehäuses 2, in den ein Filtermedium 8 in Form eines Filtervlieses eingebracht ist. Ferner ist in den Gehäuseinnenraum 7 ein Öl eingebracht.

An einer ersten der Kunststoffhalbschalen 3 ist außenseitig ein Saugstutzen 9 einstückig angeformt, der einen oder einen Teil eines Saugkanals 10 bildet, der mit einer Saugseite einer Saugpumpe verbunden oder verbindbar ist. Der Saugkanal 10 ist für die Leitung oder Durchleitung eines von der Saugpumpe angesaugten Saugölstroms vorgesehen. Ferner ist an der ersten Kunststoffhalbschale 3 außenseitig ein Druckstutzen 11 einstückig angeformt, der einen oder einen Teil eines Rückführungskanals 12 bildet, der in den Saugkanal 10 einmündet. Der Rückführungskanal 12 ist für die Leitung oder die Durchleitung eines von der Saugpumpe zurückgeführten Druckölstroms zwecks Aufladung des Saugölstroms vorgesehen.

In den Rückführungskanal 12 sind eine Düse 13 aus Kunststoff und ein Druckölzuführrohr 14 aus Kunststoff eingesteckt, wobei die Düse 13 zwischen der Mündung des Rückführungskanals 12 in den Saugkanal 10 und dem Druckölzuführrohr 14 angeordnet ist, welches mit einer Druckseite der Saugpumpe verbunden oder verbindbar ist. Ferner ist der in den Rückführungskanal 12 eingesteckte Endbereich des Druckölzuführrohrs 14 an seinem Außenumfang mittels einer Dichtung 15 gegenüber dem Innenumfang des Rückführungskanals 12 abgedichtet. Dem Saugkanal 10 ist ebenfalls eine Dichtung 38 zugeordnet, mittels welcher der Saugkanal 10 gegenüber einer Verbindungsleitung abgedichtet oder abdichtbar ist, mittels welcher der Saugkanal 10 mit der Saugseite der Saugpumpe verbunden oder verbindbar ist.

In einer zweiten der Kunststoffhalbschalen 4 ist eine Ölrückführöffnung 16 vorgesehen, die an die Druckseite der Saugpumpe angeschlossen oder anschließbar ist. Die Ölrückführöffnung 16 dient zur Rückführung des von der Saugpumpe angesaugten Öls, welches von der Pumpe als Rückführölstrom abgegeben wird, von dem der Druckölstrom abgezweigt wird. Der um den Druckölstrom verringerte Rückführölstrom wird als Rückführölhauptstrom bezeichnet und durch die Ölrückführöffnung 16 hindurch dem Gehäuseinnenraum 7 zugeführt. Die Ölrückführöffnung 16 und der Saugkanal 10 sind auf unterschiedlichen Seiten des Filtermediums 8 vorgesehen.

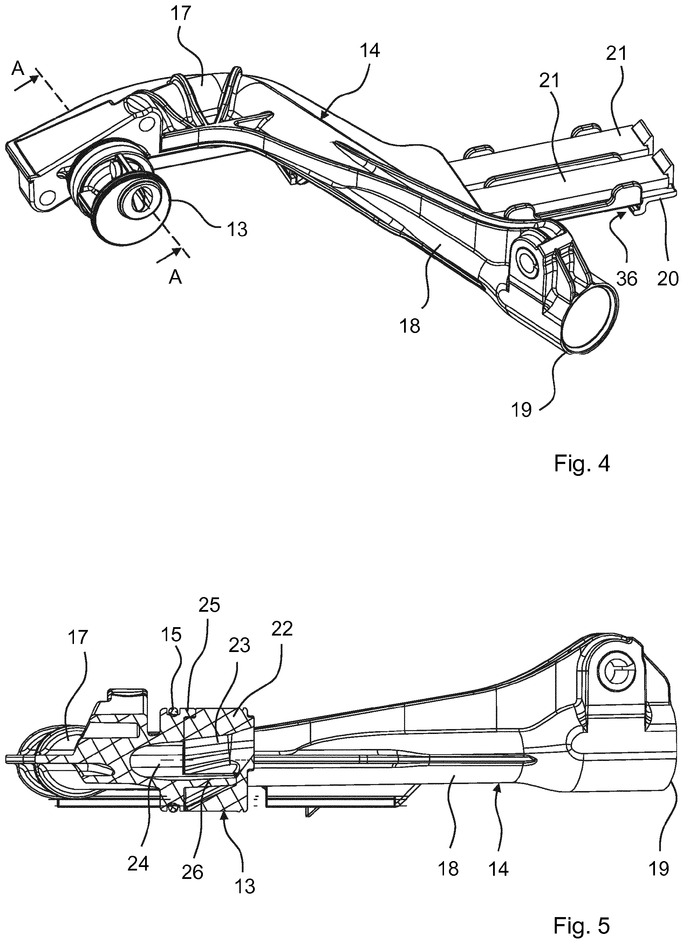

Das Druckölzuführrohr 14 ist zusammen mit der Düse 13 in perspektivischer Ansicht aus Fig. 4 ersichtlich und weist einen gekrümmten Abschnitt 17, der durch den der Düse 13 zugewandten Endbereich des Druckölzuführrohrs 14 gebildet ist, und einen sich an den gekrümmten Abschnitt 17 anschließenden geraden Abschnitt 18 auf, dessen freies Ende 19 an die Druckseite der Saugpumpe angeschlossen oder anschließbar ist. Durch die Krümmung des Druckölzuführrohr 14 ist es möglich, den Saugkanal 10 und das Druckölzuführrohr 14 von derselben Seite her mit der Saugpumpe zu verbinden. Das Druckölzuführrohr 14 umfasst eine einstückig angeformte Magnetaufnahme 20, von der zwei Permanentmagnete 21 gehalten sind, mittels welchen magnetische oder magnetisierbare Partikel im Öl festgehalten werden oder werden können.

Eine Schnittansicht des Druckölzuführrohrs 14 und der Düse 13 entlang einer in Fig. 4 gezeigten Schnittlinie A-A ist aus Fig. 5 ersichtlich. Die Düse 13 umfasst einen Düsenkörper 22, durch welchen sich eine Düsenausnehmung 23 hindurch erstreckt. Ferner bildet der Rohrinnenraum des Druckölzuführrohrs 14 einen Fließkanal 24, durch welchen hindurch der von der Saugpumpe zurückgeführte Druckölstrom der Düse 13 und/oder dem Rückführungskanal 12 zuführbar ist. Der Fließkanal 24 weist im gekrümmten Abschnitt 17 einen ovalen Querschnitt auf und geht in seinem der Düse 13 zugewandten Endbereich kontinuierlich in die Düsenausnehmung 23 über. Ferner weist der Fließkanal 24 im geraden Abschnitt 18 einen sich entlang der Längserstreckung des geraden Abschnitts ändernden Querschnitt auf, der sich von einem ovalen Querschnitt zu einem kreisrunden Querschnitt an seinem freien Ende 19 ändert.

Das Druckölzuführrohr 14 weist an seinem der Düse 13 zugewandten Ende einen Verriegelungsbereich 25 auf, in den die Düse 13 eingeschoben und dabei mit dem Druckölzuführrohr 14 verrastet wird oder ist. Ferner weist das Druckölzuführrohr 14 an seinem der Düse 13 zugewandten Ende ein Zunge 26 auf, die in die Düsenausnehmung 23 eingreift. Die Zunge 26 begünstigt den kontinuierlichen Übergang zwischen dem Fließkanal 24 und der Düsenausnehmung 23.

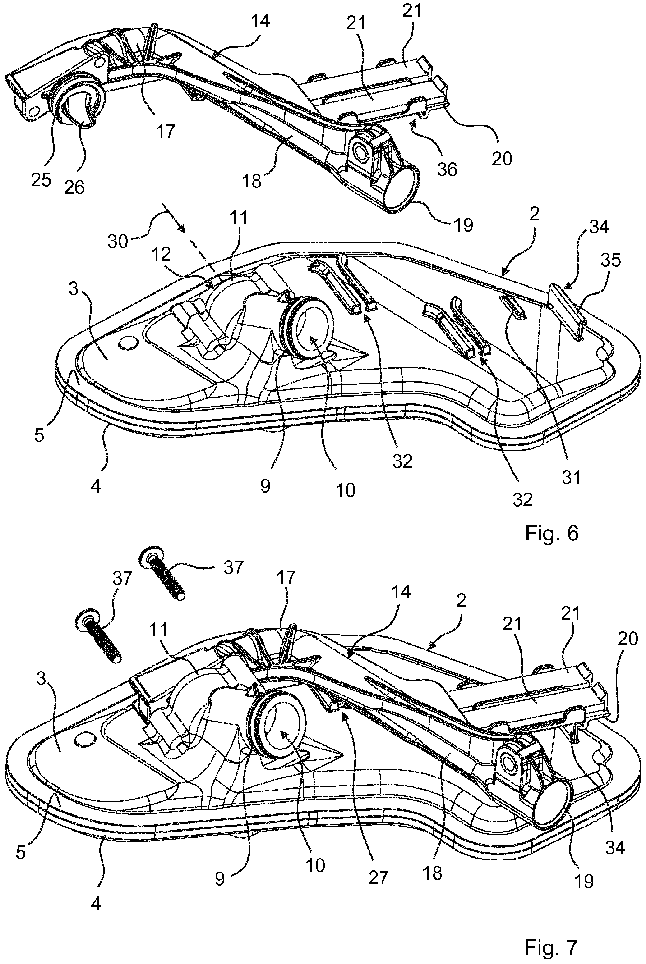

Das Druckölzuführrohr 14 ist durch mehrere Gleitführungen 27, 28 und 29 formschlüssig mit dem Ölfiltergehäuse 2 verbunden, die sich in oder näherungsweise in einer Rückführungskanalrichtung 30 (siehe Fig. 6) erstrecken, in welcher sich der Rückführungskanal 12 erstreckt. Die Gleitführungen 27 und 28 sind dabei als Schwalbenschwanzführungen ausgebildet. Ferner ist das Druckölzuführrohr 14 im Bereich der Magnetaufnahme 20 mittels einer Schnappverbindung mit dem Ölfiltergehäuse 2 verbunden. Dazu weist die Magnetaufnahme 20 an ihrer Unterseite ein Schnappelement auf, welches einen auf der Außenseite des Ölfiltergehäuses 2 vorgesehenen Vorsprung 31 hintergreift. Zur Ausbildung der Schwalbenschwanzführungen 27 und 28 sind an der Außenseite des Ölfiltergehäuses 2 in oder näherungsweise in Rückführungskanalrichtung 30 verlaufende Nuten 32 vorgesehen, in welche an dem Druckölzuführrohr 14 vorgesehene Gleitelemente 33 eingreifen. Zur Ausbildung der Gleitführung 29 ist an der Außenseite des Ölfiltergehäuses 2 eine in oder näherungsweise in Rückführungskanalrichtung 30 verlaufende L-förmige Schiene 34 vorgesehen, deren Abwinkelung 35 in eine an der Unterseite der Magnetaufnahme 20 vorgesehenen Nut 36 seitlich eingreift. Zur zusätzlichen Sicherung ist das Druckölzuführrohr 14 mittels selbstfurchender Schrauben 37 mit dem Druckstutzen 11 verschraubt.

Die Montage des Druckölzuführrohrs 14 wird insbesondere unter Bezugnahme auf die Fig. 6 und 7 beschrieben, wobei Fig. 6 eine perspektivische Ansicht des Saugölfiltergehäuses 2 und des Druckölzuführrohrs 14 vor seiner Montage an dem Saugölfiltergehäuse 2 zeigt. Ferner zeigt Fig. 7 eine perspektivische Ansicht des Saugölfiltergehäuses und des Druckölzuführrohrs im teilmontierten Zustand sowie von zwei Schrauben.

Die Montage des Druckölzuführrohrs 14 an dem Ölfiltergehäuse 2 erfolgt derart, dass zunächst die Düse 13 am Druckölzuführrohr 14 und/oder am Verriegelungsbereich 25 verrastet wird. Anschließend wird das Druckölzuführrohr 14 mit seinen Gleitelementen 33 in die Nuten 32 eingeführt. Ferner wird die Abwinkelung 35 der Schiene 34 in die Nut 36 eingeführt. Nun wird das Druckölzuführrohr 14 in oder näherungsweise in Rückführungskanalrichtung 30 geschoben, bis das an der Unterseite der Magnetaufnahme 20 vorgesehene Schnappelement den Vorsprung 31 hintergreift. Während des Schiebens werden zunächst die Düse 13 und anschließend der der Düse 13 und/oder dem Rückführungskanal 12 zugewandte Endbereich des Druckölzuführrohrs 14 in den Rückführungskanal 12 eingebracht. Danach wird das Druckölzuführrohr 14 mittels der Schrauben 37 mit dem Druckstutzen 11 verschraubt. Abschließend werden die beiden Kunststoffhalbschalen 3 und 4 miteinander verschweißt.

### Bezugszeichenliste

- 1: Saugölfilter
- 2: Ölfiltergehäuse
- 3: erste Halbschale des Ölfiltergehäuses
- 4: zweite Halbschale des Ölfiltergehäuses
- 5: Rand der ersten Halbschale
- 6: Rand der zweiten Halbschale
- 7: Gehäuseinnenraum
- 8: Filtermedium
- 9: Saugstutzen
- 10: Saugkanal
- 11: Druckstutzen
- 12: Rückführungskanal
- 13: Düse
- 14: Druckölzuführrohr
- 15: Dichtung
- 16: Ölrückführöffnung
- 17: gekrümmter Abschnitt des Druckölzuführrohrs
- 18: gerader Abschnitt des Druckölzuführrohrs
- 19: freies Ende des geraden Abschnitts
- 20: Magnetaufnahme
- 21: Permanentmagnet
- 22: Düsenkörper
- 23: Düsenausnehmung
- 24: Fließkanal
- 25: Verriegelungsbereich
- 26: Zunge
- 27: Gleitführung
- 28: Gleitführung
- 29: Gleitführung
- 30: Rückführungskanalrichtung
- 31: Vorsprung
- 32: Nut
- 33: Gleitelement
- 34: Schiene
- 35: Abwinkelung der Schiene
- 36: Nut
- 37: Schrauben
- 38: Dichtung

## Patentansprüche

1. Saugölfilter für ein Getriebe oder Verbrennungsmotor, mit einem Ölfiltergehäuse (2) aus Kunststoff, das wenigstens einen mit einer Saugseite einer Saugpumpe verbindbaren Saugkanal (10) und wenigstens einen in den Saugkanal (10) einmündenden Rückführungskanal (12) für einen von der Saugpumpe zurückgeführten Druckölstrom aufweist, wobei der Rückführungskanal (12) im Bereich seiner Mündung in den Saugkanal (10) mit wenigstens einer Düse (13) versehen ist, und wenigstens einem an den Rückführungskanal (12) angeschlossenen und mit einer Druckseite der Saugpumpe verbindbaren Druckölzuführrohr (14), wobei das Druckölzuführrohr (14) über wenigstens eine Konturenverbindung formschlüssig mit dem Ölfiltergehäuse (2) verbunden ist, **dadurch gekennzeichnet, dass** das Druckölzuführrohr (14) zusammen mit der Düse (13) in den Rückführungskanal (12) eingesteckt ist.

2. Saugölfilter nach Anspruch 1, **dadurch gekennzeichnet, dass** das Druckölzuführrohr (12) aus Kunststoff besteht.

3. Saugölfilter nach Anspruch 1 oder 2, **dadurch gekennzeichnet, dass** die wenigstens eine Konturenverbindung eine oder mehrere Gleitführungen (27, 28, 29) umfasst.

4. Saugölfilter nach Anspruch 3, **dadurch gekennzeichnet, dass** die eine oder die mehreren Gleitführungen eine oder mehrere Schwalbenschwanzführungen (27, 28) und/oder eine oder mehrere Schienenführungen (29) umfassen.

5. Saugölfilter nach Anspruch 3 oder 4, **dadurch gekennzeichnet, dass** sich die eine oder jede der Gleitführungen (27, 28, 29) in oder näherungsweise in einer Rückführungskanalrichtung (30) erstreckt, in der sich der Rückführungskanal (12) erstreckt.

6. Saugölfilter nach einem der vorangehenden Ansprüche, **dadurch gekennzeichnet, dass** das Druckölzuführrohr (14) zusätzlich durch wenigstens eine Schnappverbindung mit dem Ölfiltergehäuse (2) verbunden ist.

7. Saugölfilter nach einem der vorangehenden Ansprüche, **dadurch gekennzeichnet, dass** das Druckölzuführrohr (14) zusätzlich durch wenigstens eine selbstfurchende Schraubverbindung mit dem Ölfiltergehäuse (2) verbunden ist.

8. Saugölfilter nach einem der vorangehenden Ansprüche, **dadurch gekennzeichnet, dass** die Düse (13) mit dem Druckölzuführrohr (14) verrastet ist.

9. Saugölfilter nach einem der vorangehenden Ansprüche, **dadurch gekennzeichnet, dass** der einen Fließkanal (24) bildendende Rohrinnenraum des Druckölzuführrohrs (14) zumindest in seinem der Düse (13) zugewandten Endbereich einen ovalen Querschnitt aufweist.

10. Saugölfilter nach einem der vorangehenden Ansprüche, **dadurch gekennzeichnet, dass** das Druckölzuführrohr (14) eine Magnetaufnahme (20) aufweist, mittels welcher wenigstens ein Magnet (21) gehalten ist.

11. Saugölfilter nach den Ansprüchen 6 und 10, **dadurch gekennzeichnet, dass** die Schnappverbindung zwischen der Magnetaufnahme (20) und dem Ölfiltergehäuse (2) vorgesehen ist.

12. Saugölfilter nach einem der vorangehenden Ansprüche, **dadurch gekennzeichnet, dass** in dem Ölfiltergehäuse (2) wenigstens ein Filtermedium (8) vorgesehen ist, mittels welchem in das Ölfiltergehäuse (2) eingebrachtes Öl filterbar ist.

13. Saugölfilter nach Anspruch 12, **dadurch gekennzeichnet, dass** das Ölfiltergehäuse (2) eine mit der Druckseite der Saugpumpe verbindbare Ölrückführöffnung (16) zur Rückführung zumindest eines Teils des von der Saugpumpe angesaugten Öls aufweist, wobei die Ölrückführöffnung (16) und der Saugkanal (10) auf unterschiedlichen Seiten des Filtermediums (8) vorgesehen sind.

## Claims

1. Suction oil filter for a gear mechanism or an internal combustion engine, having an oil filter housing (2) which is produced from plastics material and which has at least one suction channel (10) which can be connected to an intake side of a suction pump and at least one return channel (12) which opens in the suction channel (10) for a pressure oil flow which is returned by the suction pump, wherein the return channel (12) is provided with at least one nozzle (13) in the region of the opening thereof into the suction channel (10), and at least one pressure oil supply pipe (14) which is connected to the return channel (12) and which can be connected to a discharge side of the suction pump, wherein the pressure oil supply pipe (14) is connected by means of at least one contour connection in a positive-locking manner to the oil filter housing (2), **characterised in that** the pressure oil supply pipe (14) is inserted together with the nozzle (13) into the return channel (12).

2. Suction oil filter according to claim 1, **characterised in that** the pressure oil supply pipe (12) comprises plastics material.

3. Suction oil filter according to claim 1 or 2, **characterised in that** the at least one contour connection comprises one or more sliding guides (27, 28, 29).

4. Suction oil filter according to claim 3, **characterised in that** the one or more sliding guides comprise(s) one or more dovetail guides (27, 28) and/or one or more rail guides (29).

5. Suction oil filter according to claim 3 or 4, **characterised in that** the one or each of the sliding guides (27, 28, 29) extend(s) in or approximately in a return channel direction (30) in which the return channel (12) extends.

6. Suction oil filter according to any one of the preceding claims, **characterised in that** the pressure oil supply pipe (14) is additionally connected to the oil filter housing (2) by means of at least one snap-fit connection.

7. Suction oil filter according to any one of the preceding claims, **characterised in that** the pressure oil supply pipe (14) is additionally connected to the oil filter housing (2) by means of at least one self-tapping screw connection.

8. Suction oil filter according to any one of the preceding claims, **characterised in that** the nozzle (13) is locked to the pressure oil supply pipe (14).

9. Suction oil filter according to any one of the preceding claims, **characterised in that** the pipe inner space of the pressure oil supply pipe (14) which forms a flow channel (24) has an oval cross-section at least in the end region thereof facing the nozzle (13).

10. Suction oil filter according to any one of the preceding claims, **characterised in that** the pressure oil supply pipe (14) has a magnet receiving member (20) by means of which at least one magnet (21) is retained.

11. Suction oil filter according to claims 6 and 10, **characterised in that** the snap-fit connection is provided between the magnet receiving member (20) and the oil filter housing (2).

12. Suction oil filter according to any one of the preceding claims, **characterised in that** there is provided in the oil filter housing (2) at least one filter medium (8) by means of which oil which is introduced into the oil filter housing (2) can be filtered.

13. Suction oil filter according to claim 12, **characterised in that** the oil filter housing (2) has an oil return opening (16) which can be connected to the discharge side of the suction pump for returning at least a portion of the oil drawn in by the suction pump, wherein the oil return opening (16) and the suction channel (10) are provided at different sides of the filter medium (8).

## Revendications

1. Filtre à huile à aspiration pour une transmission ou un moteur à combustion, avec un boîtier de filtre à huile (2) en matière plastique qui comprend au moins un canal d'aspiration (10) pouvant être relié avec un côté d'aspiration d'une pompe d'aspiration et au moins un canal de retour (12) débouchant dans le canal d'aspiration (10) pour un flux d'huile sous pression retournée par la pompe d'aspiration, dans lequel le canal de retour (12) est muni, au niveau de son embouchure dans le canal d'aspiration (10), d'au moins une buse (13) et d'au moins un tuyau d'alimentation en huile sous pression (14) raccordé au canal de retour (12) et pouvant être relié avec un côté de pression de la pompe d'aspiration, dans lequel le tuyau d'alimentation en huile sous pression (14) est relié par complémentarité de forme avec le boîtier de filtre à huile (2) par l'intermédiaire d'au moins une liaison de contour, **caractérisé en ce que** le tuyau d'alimentation en huile sous pression (14) est emboîté, avec la buse (13), dans le canal de retour (12).

2. Filtre à huile à aspiration selon la revendication 1, **caractérisé en ce que** le tuyau d'alimentation en huile sous pression (12) est formé de matière plastique.

3. Filtre à huile à aspiration selon la revendication 1 ou 2, **caractérisé en ce que** l'au moins une liaison de contour comprend un ou plusieurs guidages coulissants (27, 28, 29).

4. Filtre à huile à aspiration selon la revendication 3, **caractérisé en ce que** le ou les guidages coulissants comprennent un ou plusieurs guidages à queue d'aronde (27, 28, 29) et/ou un ou plusieurs guidages à glissières (29).

5. Filtre à huile à aspiration selon la revendication 3 ou 4, **caractérisé en ce que** le ou chacun des guidages coulissants (27, 28, 29) s'étend dans ou approximativement dans une direction de canal de retour (30), dans laquelle s'étend le canal de retour (12).

6. Filtre à huile à aspiration selon l'une des revendications précédentes, **caractérisé en ce que** le tuyau d'alimentation en huile sous pression (14) est relié en outre à l'aide d'au moins une liaison par encliquetage avec le boîtier de filtre à huile (2).

7. Filtre à huile à aspiration selon l'une des revendications précédentes, **caractérisé en ce que** le tuyau d'alimentation en huile sous pression (14) est relié en outre à l'aide d'au moins une liaison par vissage auto-taraudeur avec le boîtier de filtre à huile (2).

8. Filtre à huile à aspiration selon l'une des revendications précédentes, **caractérisé en ce que** la buse (13) est encliquetée avec le tuyau d'alimentation en huile sous pression (14).

9. Filtre à huile à aspiration selon l'une des revendications précédentes, **caractérisé en ce que** l'espace interne du tuyau d'alimentation en huile sous pression (14), formant un canal d'écoulement (24), présente, au moins sa partie d'extrémité orientée vers la buse (13), une section transversale ovale.

10. Filtre à huile à aspiration selon l'une des revendications précédentes, **caractérisé en ce que** le tuyau d'alimentation en huile sous pression (14) comprend un logement magnétique (20) au moyen duquel au moins un aimant (21) est maintenu.

11. Filtre à huile à aspiration les revendications 6 et 10, **caractérisé en ce que** la liaison par encliquetage est prévue entre le logement magnétique (20) et le boîtier de filtre à huile (2).

12. Filtre à huile à aspiration selon l'une des revendications précédentes, **caractérisé en ce que**, dans le boîtier de filtre à huile (2) est prévu au moins un milieu filtrant (8) au moyen duquel l'huile introduite dans le boîtier de filtre à huile (2) peut être filtrée.

13. Filtre à huile à aspiration selon la revendication 12, **caractérisé en ce que** le boîtier de filtre à huile (2) comprend une ouverture de retour d'huile (16), pouvant être reliée avec le côté de pression de la pompe d'aspiration, pour le retour d'au moins une partie de l'huile aspirée par la pompe d'aspiration, dans lequel l'ouverture de retour d'huile (16) et le canal d'aspiration (10) sont prévus sur des côtés différents du milieu filtrant (8).
